(19) Europäisches Patentamt
European Patent Office
Office européen des brevets

(11) Veröffentlichungsnummer: **0 602 551 A1**

(12) # EUROPÄISCHE PATENTANMELDUNG

(21) Anmeldenummer: **93119887.3**

(51) Int. Cl.$^5$: **C09D 11/00**

(22) Anmeldetag: **09.12.93**

(30) Priorität: **18.12.92 DE 4242868**

(43) Veröffentlichungstag der Anmeldung:
**22.06.94 Patentblatt 94/25**

(84) Benannte Vertragsstaaten:
**AT BE CH DE ES FR GB IT LI NL PT**

(71) Anmelder: **HOECHST AKTIENGESELLSCHAFT**
**Brüningstrasse 50**
**D-65929 Frankfurt am Main(DE)**

(72) Erfinder: **Eltz v.d., Andreas, Dr.**
**Eschersheimer Landstrasse 514**
**D-60433 Frankfurt am Main(DE)**
Erfinder: **Russ, Werner Hubert, Dr.**
**Wingerstrasse 8a**
**D-65439 Flörsheim am Main(DE)**

(54) **Wasserfeste Tintenformulierung.**

(57) Tintenformulierungen, bestehend im wesentlichen aus
a) mindestens einem wasserlöslichen Farbstoff,
b) mindestens einem Fettalkoholpolyglykolether, Oxofettalkoholpolyglykolether, Alkylpolyglykolether und Ethylenoxid-Propylenoxid-Blockpolymerisate,
c) Wasser sowie
d) gegebenenfalls weiteren üblichen Zusatzstoffen,
eignen sich zum Färben oder Bedrucken von Papier mit wasserlöslichen Farbstoffen, insbesondere Reaktivfarbstoffen unter Anwendung des Ink-Jet-Verfahrens oder einer anderen Minimalauftragssprühtechnik und liefern brilliante und wasserfeste Drucke.

EP 0 602 551 A1

Das Ink-Jet- oder Tintenstrahl-Druckverfahren bietet von den berührungslosen Druckverfahren die einzige Möglichkeit, schnell, leise und in hoher Auflösung farbige Bilder zu produzieren. Bei diesem Verfahren vewendet man üblicherweise wäßrige Tinten, die in kleinen Tröpfchen direkt auf das Substrat gesprüht werden. Man unterscheidet dabei ein kontinuierliches Verfahren, bei dem die Tinte gleichmäßig durch eine Düse gepreßt und durch ein elektrisches Feld, abhängig vom zu druckenden Muster, auf das Papier oder in einen Farbfänger gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color 19 (8), 23-29 und 21 (6), 27-32 beschrieben.

Es ist weiterhin bekannt, daß man durch den Zusatz von Verdickern, beispielsweise Glycerinen, oder anderen organischen Hilfskomponenten die Druckspezifikation von wasserlöslichen anionischen Farbstoffen auf Papier beeinflussen kann (vgl. die Japanische Patentanmeldungs-Veröffentlichung Sho-62-39665, Hei-1-103482 und Hei-2-36278 sowie EP-A-320 223). Des weiteren sind aus Sho-63-260477 Beschichtungen von Spezialpapieren bekannt, die die Druckqualität der meist wäßrigen Tinten erhöhen soll.

In keiner der genannten Literaturstellen wird jedoch das Problem der Wasserechtheit von mit wasserlöslichen Farbstoffen bedrucktem Papier gelöst.

Besonders die farbigen Tintenstrahldrucke sind bislang mit dem Nachteil einer auffällig schlechten Wasserechtheit behaftet.

Die Aufgabe der vorliegenden Erfindung bestand darin, eine Formulierung wasserlöslicher, vorzugsweise anionischer Farbstoffe zur Verfügung zu stellen, die unter Anwendung des Ink-Jet-Verfahrens oder einer anderen Minimalauftragssprühtechnik auf Papier Drucke mit hoher Wasserechtheit und Wassertropfenechtheit liefert.

Es wurde gefunden, daß die vorstehend genannte Aufgabe überraschenderweise durch den Zusatz eines handelsüblichen Tapetenlösers zu dem wasserlöslichen Farbstoff gelöst werden kann.

Unter handelsüblichen Tapetenlösern sind solche Gemische zu verstehen, die im wesentlichen eine oder mehrere Verbindungen aus der Gruppe der Fettalkoholpolyglykolether, Oxofettalkoholpolyglykolether, Alkylpolyglykolether und Ethylenoxid-Propylenoxid-Blockpolymerisate sowie als Verdünner einen $C_1$-$C_4$-Alkohol, meist Isopropanol, enthalten.

Gegenstand der vorliegenden Erfindung ist eine Tintenformulierung bestehend im wesentlichen aus

a) mindestens einem wasserlöslichen Farbstoff,

b) mindestens einem Fettalkoholpolyglykolether, Oxofettalkoholpolyglykolether, Alkylpolyglykolether oder Ethylenoxid-Propylenoxid-Blockpolymerisat oder einem Gemisch der genannten Verbindungen,

c) Wasser sowie

d) gegebenenfalls weiteren üblichen Zusatzstoffen.

a) Für die erfindungsgemäße Tintenformulierung sind alle wasserlöslichen, vorzugsweise anionischen Farbstoffe, die eine oder mehrere Sulfo- und/oder Carboxygruppen und gegebenenfalls faserreaktive Gruppen enthalten, geeignet. Die Farbstoffe können außer der Klasse der faserreaktiven Farbstoffe auch der Klasse der Azo-Entwicklungsfarbstoffe, der Direktfarbstoffe, der Küpenfarbstoffe und der Säurefarbstoffe angehören, die beispielsweise Azofarbstoffe, Kupferkomplex-, Kobaltkomplex- und Chromkomplex-Azofarbstoffe, Kupfer- und Nickelphthalocyanin-Farbstoffe, Anthrachinon-, Kupferformazan- und Triphendioxazinfarbstoffe sein können. Solche Farbstoffe sind zahlreich in der Literatur beschrieben und dem Fachmann allseits geläufig.

Von den vorstehend erwähnten, für die erfindungsgemäße Tintenformulierung verwendbaren Farbstoffen werden bevorzugt die faserreaktiven Farbstoffe eingesetzt. Faserreaktive Farbstoffe sind solche organischen Farbstoffe, die 1, 2, 3 oder 4 faserreaktive Reste der aliphatischen, aromatischen oder heterocyclischen Reihe enthalten. Solche Farbstoffe sind zahlreich in der Literatur beschrieben. Die Farbstoffe können den verschiedensten Farbstoffklassen angehören, wie beispielsweise der Klasse der Monoazo-, Disazo-, Polyazo-, Metallkomplex-Azo-, wie 1:1-Kupfer-, 1:2-Chrom- und 1:2-Kobaltkomplex-Monoazo- und -Disazo-Farbstoffe, weiterhin der Reihe der Anthrachinonfarbstoffe, Kupfer- und Kobaltphthalocyaninfarbstoffe, Kupferformazanfarbstoffe, Azomethin-, Nitroaryl-, Dioxazin-, Triphendioxazin-, Phenazin- und Stilbenfarbstoffe. Unter faserreaktiven Farbstoffen werden solche verstanden, die eine "faserreaktive" Gruppe besitzen, d.h. eine Gruppe, die mit den Hydroxygruppen der Cellulose unter Bildung covalenter chemischer Bindungen zu reagieren vermag. Der faserreaktive Rest kann direkt oder über ein Brückenglied an den Farbstoffrest gebunden sein; vorzugsweise ist er direkt oder über eine gegebenenfalls monoalkylierte Aminogruppe, wie beispielsweise eine Gruppe der Formel -NH-, $-N(CH_3)-$, $-N(C_2H_5)-$ oder $-N(C_3H_7)-$, oder über einen aliphatischen Rest, wie einen Methylen-, Ethylen- oder Propylen-Rest

oder einen Alkylenrest von 2 bis 8 C-Atomen, der durch eine oder zwei Oxi- und/oder Aminogruppen unterbrochen sein kann, oder über ein eine Aminogruppe enthaltendes Brückenglied, wie beispielsweise eine Phenylaminogruppe, an den Farbstoffrest gebunden. Faserreaktive Reste sind beispielsweise: Vinylsulfonyl, β-Chlorethylsulfonyl, β-Sulfatoethylsulfonyl, β-Acetoxy-ethylsulfonyl, β-Phosphatoethylsulfonyl, β-Thiosulfatoethylsulfonyl, N-Methyl-N-(β-sulfatoethyl-sulfonyl)-amino, Acryloyl, $-CO-CCl=CH_2$, -CO-CH=CH-Cl, -CO-CCl=CHCl, $-CO-CCl=CH-CH_3$, $-CO-CBr=CH_2$, -CO-CH=CH-Br, $-CO-CBr=CH-CH_3$, -CO-CCl=CH-COOH, -CO-CH=CCl-COOH, -CO-CBr=CH-COOH, -CO-CH=CBr-COOH, -CO-CCl=CCl-COOH, -CO-CBr=CBr-COOH, β-Chlor- oder β-Brompropionyl, 3-Phenylsulfonylpropionyl, 3-Methylsulfonylpropionyl, 3-Chlor-3-phenylsulfonylpropionyl, 2,3-Dichlorpropionyl, 2,3-Dibrompropionyl, 2-Fluor-2-chlor-3,3-difluorcyclobutan-2-carbonyl, 2,2,3,3-Tetrafluorcyclobutan-1-carbonyl oder -1-sulfonyl, β-(2,2,3,3-Tetrafluorcyclobutyl-1)acryloyl, α- oder β-Methylsulfonylacryloyl, Propiolyl, Chloracetyl, Bromacetyl, 4-(β-Chlorethyl-sulfonyl)-butyryl, 4-Vinylsulfonyl-butyryl, 5-(β-Chlorethyl-sulfonyl)valeryl, 5-Vinylsulfonyl-valeryl, 6-(β-Chlorethyl-sulfonyl)-caproyl, 6-Vinylsulfonyl-caproyl, 4-Fluor-3-nitro-benzoyl, 4-Fluor-3-nitrophenylsulfonyl, 4-Fluor-3-methyl-sulfonylbenzoyl, 4-Fluor-3-cyano-benzoyl, 2-Fluor-5-methylsulfonylbenzoyl, 2,4-Dichlortriazinyl-6, 2,4-Dichlorpyrimidinyl-6, 2,4,5-Trichlorpyrimidinyl-6, 2,4-Dichlor-5-nitro- oder 5-methyl- oder 5-carboxymethyl oder -5-carboxy oder -5-cyano oder -5-vinyl oder -5-sulfo oder -5-mono-, di- oder trichlormethyl oder -5-methylsulfonyl-pyrimidinyl-6, 2,5-Dichlor-4-methylsulfonyl-pyrimidinyl-6, 2-Fluor-4-pyrimidinyl, 2,6-Difluor-4-pyrimidinyl, 2,6-Difluor-5-chlor-4-pyrimidinyl, 2-Fluor-5,6-dichlor-4-pyrimidinyl, 2,6-Difluor-5-methyl-4-pyrimidinyl, 2,5-Difluor-6-methyl-4-pyrimidinyl, 2-Fluor-5-methyl-6-chlor-4-pyrimidinyl, 2-Fluor-5-nitro-6-chlor-4-pyrimidinyl, 5-Brom-2-fluor-4-pyrimidinyl, 2-Fluor-5-cyan-4-pyrimidinyl, 2-Fluor-5-methyl-4-pyrimidinyl, 2,5,6-Trifluor-4-pyrimidinyl, 5-Chlor-6-chlormethyl-2-fluor-4-pyrimidinyl, 2,6-Difluor-5-brom-4-pyrimidinyl, 2-Fluor-5-brom-6-chlor-methyl-4-pyrimidinyl, 2,6-Difluor-5-chlormethyl-4-pyrimidinyl, 2,6-Difluor-5-nitro-4-pyrimidinyl, 2-Fluor-6-methyl-4-pyrimidinyl, 2-Fluor-5-chlor-6-methyl-4-pyrimidinyl, 2-Fluor-5-chlor-4-pyrimidinyl, 2-Fluor-6-chlor-4-pyrimidinyl, 6-Trifluormethyl-5-chlor-2-fluor-4-pyrimidinyl, 6-Trifluormethyl-2-fluor-4-pyrimidinyl, 6-Trifluormethyl-2-fluor-4-pyrimidinyl, 2-Fluor-5-nitro-4-pyrimidinyl, 2-Fluor-5-trifluormethyl-4-pyrimidinyl, 2-Fluor-5-phenyl oder -5-methylsulfonyl-4-pyrimidinyl, 2-Fluor-5-carbonamido-4-pyrimidinyl, 2-Fluor-5-carbomethoxy-4-pyrimidinyl, 2-Fluor-5-brom-6-trifluormethyl-4-pyrimidinyl, 2-Fluor-6-carbonamido-4-pyrimidinyl, 2-Fluor-6-carbomethoxy-4-pyrimidinyl, 2-Fluor-6-phenyl-4-pyrimidinyl, 2-Fluor-6-cyan-4-pyrimidinyl, 2,6-Difluor-5-methylsulfonyl-4-pyrimidinyl, 2-Fluor-5-sulfonamido-4-pyrimidinyl, 2-Fluor-5-chlor-6-carbomethoxy-4-pyrimidinyl, 2,6-Difluor-5-trifluormethyl-4-pyrimidinyl, 2,4-Bis-(methylsulfonyl)-pyrimidinyl-4, 2,5-Bis-(methylsulfonyl)-5-chlor-pyrimidinyl-4, 2-Methylsulfonylpyrimidinyl-4, 2-Phenylsulfonyl-pyrimidinyl-4, 2-Methylsulfonyl-5-chlor-6-methyl-pyrimidinyl-4, 2-Methylsulfonyl-5-brom-6-methylpyrimidinyl-4, 2-Methylsulfonyl-5-chlor-6-ethyl-pyrimidinyl-4, 2-Methylsulfonyl-5-chlor-methyl-pyrimidinyl-4, 2-Methylsulfonyl-5-nitro-6-methyl-pyrimidinyl-4, 2,5,6-Tris-methylsulfonyl-pyrimidinyl-4, 2-Methylsulfonyl-5,6-dimethyl-pyrimidinyl-4, 2-Ethylsulfonyl-5-chlor-6-methylpyrimidinyl-4, 2-Methylsulfonyl-6-chlorpyrimidinyl-4, 2,6-Bis-(methylsulfonyl)-5-chlor-pyrimidinyl-4, 2-Methylsulfonyl-6-carboxy-pyrimidinyl-4, 2-Methylsulfonyl-5-sulfopyrimidinyl-4, 2-Methylsulfonyl-6-carbomethoxy-pyrimidinyl-4, 2-Methylsulfonyl-5-carboxy-pyrimidinyl-4, 2-Methylsulfonyl-5-cyan-6-methoxy-pyrimidinyl-4, 2-Methylsulfonyl-5-chlor-pyrimidinyl-4, 2-Sulfoethylsulfonyl-6-methylpyrimidinyl-4, 2-Methylsulfonyl-5-brom-pyrimidinyl-4, 2-Phenylsulfonyl-5-chlor-pyrimidinyl-4, 2-Carboxymethylsulfonyl-5-chlor-6-methyl-pyrimidinyl-4, 2,4-Dichlorpyrimidin-6-carbonyl oder -6-sulfonyl, 2,4-Dichlorpyrimidin-5-carbonyl oder -5-sulfonyl, 2-Chlor-4-methylpyrimidin-5-carbonyl, 2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2,4-Dichlor-6-methyl-pyrimidin-5-carbonyl oder -5-sulfonyl, 2-Methylsulfonyl-6-chlorpyrimidin-4 und -5-carbonyl, 2,6-Bis-(methylsulfonyl)-pyrimidin-4 oder -5-carbonyl, 2-Ethylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl- oder -5-carbonyl, 2-Chlorchinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2,3-Dichlorchinoxalin-5- oder -6-sulfonyl, 1,4-Dichlorphthalazin-6-sulfonyl- oder -6-carbonyl, 2,4-Dichlorchinazolin-7- oder -6-sulfonyl- oder -carbonyl, 2,4,6-Trichlorchinazolin-7 oder 8-sulfonyl, 2- oder 3- oder 4-(4',5'-Dichlor-pyridazon-6'-yl-1')-phenylsulfonyl oder -carbonyl, β-(4',5'-Dichlorpyridazinon-6'-yl-1')-propionyl, 3,6-Dichlorpyridazin-4-carbonyl oder -4-sulfonyl, 2-Chlorbenzthiazol-5- oder -6-carbonyl oder -5- oder -6-sulfonyl, 2-Arylsulfonyl- oder 2-Alkylsulfonylbenzthiazol-5- oder -6-carbonyl oder -5- oder -6-sulfonyl, wie 2-Methylsulfonyl- oder 2-Ethylsulfonylbenzthiazol-5- oder -6-sulfonyl oder -carbonyl, 2-Phenylsulfonyl-benzthiazol-5- oder -6-sulfonyl- oder -carbonyl und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl, 2-Chlorbenzimidazol-5- oder -6-carbonyl oder -sulfonyl, 2-Chlor-1-methylbenzimidazol-5- oder -6-carbonyl oder -sulfonyl, 2-Chlor-4-methylthiazol-(1,3)-5-carbonyl oder -4- oder -5-sulfonyl; ammoniumgruppenhaltige Triazinringe, wie 2-Trimethylammonium-4-phenylamino- und 4-(o, m- oder p-Sulfophenyl)-amino-triazinyl-6, 2-(1,1-Dimethylhydrazinium)-4-phenylamino- und 4-(o-, m- oder p-Sulfophenyl)aminotriazinyl-6, 2-(2-Isopropyliden-1,1-dimethyl)-hydrazinium-4-phenylamino- und 4-(o-, m- oder p-Sulfophenyl)-aminotriazinyl-6, 2-N-Aminopyrrolidinium-, 2-N-Aminopiperidinium-4-phenylamino- oder 4-(o-, m- oder p-Sulfophenyl)-aminotriazinyl-6, 4-Phenylamino- oder 4-(Sulfophenylamino)-triazinyl-6, die in 2-Stellung über eine Stickstoffbindung das 1,4-Bis-aza-bicyclo[2,2,2]octan oder das 1,2-Bis-aza-bicyclo-[0,3,3]-octan quartär gebunden enthalten, 2-Pyridinium-4-phenylamino- oder 4-(o-, m- oder p-Sulfophenyl)-amino-triazinyl-6 sowie entsprechende 2-Oniumtriazinyl-6-Reste, die in 4-Stellung durch Alkylamino, wie Methylamino, Ethylamino oder β-Hydroxy-ethylamino, oder Alkoxy, wie Methoxy oder Ethoxy, oder Aryloxy, wie Phenoxy oder Sulfophenoxy, substituiert sind.

b) Als Fettalkoholpolyglykolether sind solche von Interesse, die aus einer Fettalkohol-Einheit mit 8 bis 30, vorzugsweise 12 bis 18, insbesondere 14 bis 16, Kohlenstoffatomen bestehen, beispielsweise Octyl-, Pelargonyl-, Capryl-, Undecyl-, Dodecyl-, Tridecyl-, Myristyl-, Pentadecyl-, Palmityl-, Heptadecyl-, Stearyl- und Oleylalkohol, insbesondere auch solche Fettalkohole, die sich aus Naturprodukten wie Kokosölfettsäure, Talgfettsäure, Tallölfettsäure, Palmölfettsäure, Leinölfettsäure, Rizinusölfettsäure und Rizinensäure ableiten.

Die Polyglykolether-Einheiten lassen sich beispielsweise durch Kondensation von Ethylenoxid an die genannten Fettalkohole herstellen und bestehen zweckmäßigerweise aus 2 bis 50, vorzugsweise 2 bis 20, besonders bevorzugt 5 bis 15, Ethylenoxideinheiten. Unter Oxofettalkoholpolyglykolether sind Fettalkoholpolyglykolether, wie vorstehend genannt, zu verstehen, die an einem Kohlenstoffatom der Fettsäurekette eine freie Hydroxygruppe tragen oder eine Carbonylgruppe enthalten.

Als Alkylpolyglykolether sind $C_8$-$C_{30}$-Alkyl-, vorzugsweise $C_{12}$-$C_{18}$-Alkyl-, insbesondere $C_{14}$-$C_{16}$-Alkylpolyglykolether mit 2 bis 50, vorzugsweise 2 bis 20, insbesondere 5 bis 15, Ethylenoxideinheiten von Interesse, wie beispielsweise ein Umsetzungsprodukt aus 1 Mol Isotridecylalkohol mit 7 bis 9 Mol Ethylenoxid.

Als Ethylenoxid-Propylenoxid-Blockpolymerisate sind solche von Interesse, die zu 10 bis 80 Mol-%, vorzugsweise 10 bis 40 Mol-%, aus Ethylenoxid und zu 90 bis 20 Mol-%, vorzugsweise 90 bis 60 Mol-%, aus Propylenoxid bestehen. Die Blockpolymerisate sollten zweckmäßigerweise in dem erfindungsgemäß eingesetzten Konzentrationsbereich in Wasser klar löslich sein. Der HLB-Wert (Hydrophilic-lipophilic balance) dieser Blockpolymerisate ist größer als 2, vorzugsweise größer als 4. Besonders bevorzugt sind Blockpolymerisate mit einem HLB-Wert zwischen 8 und 15.

Von besonderem Interesse sind auch Mischungen aus einem oder mehreren der genannten (Oxo)-Fettalkoholpolyglykolether, Alkylpolyglykolether und/oder Ethylenoxid-Propylenoxid-Blockpolymerisate.

d) Die Farbstofflösungen enthalten gegebenenfalls Hilfsmittel, die üblicherweise in den Tinten für Tintenstrahldrucker enthalten sind, wie beispielsweise Antiaggregationsmittel, wie N-Methyl-pyrrolidon, Dimethylformamid und Dimethylacetamid, Netzmittel, wie ionische oder nicht-ionische Tenside, Triethanolamin als Puffer, und Glykole wie Diethylenglykol als Viskositätsstellmittel.

Im Falle, daß ein handelsüblicher Tapetenlöser, der einen oder mehrere der in b) genannten Verbindungen enthält, eingesetzt wird, ist auch der Verdünner in der erfindungsgemäßen Tintenformulierung vorhanden. Dieser Verdünner, meist Isopropanol, hat keinen vorteilhaften Effekt im Sinne der vorliegenden Erfindung, er stört aber auch nicht, sofern sein Gehalt in der Tintenformulierung nicht über 10 Gew.-% beträgt.

Bevorzugt im Sinne der vorliegenden Erfindung ist eine Tintenformulierung, bestehend zu
3 bis 10 Gew.-%, vorzugsweise 4 bis 6 Gew.-%, aus Komponente a),
zu 1 bis 10 Gew.-%, vorzugsweise 2 bis 5 Gew.-%, aus Komponente b),
zu 94 bis 77 Gew.-%, vorzugsweise 92 bis 86 Gew.-%, aus Komponente c),
und zu 0 bis 5 Gew.-%, vorzugsweise 2 bis 3 Gew.-% aus Komponente d), mit der Maßgabe, daß die Summe der Komponenten a) bis d) 100 Gew.-% ergibt.

Gegenstand der vorliegenden Erfindung ist auch ein Verfahren zum Färben oder Bedrucken von Papier mit wasserlöslichen, vorzugsweise anionischen Farbstoffen, insbesondere Reaktivfarbstoffen, unter Anwendung des Ink-Jet-Verfahrens oder einer anderen Minimalauftragssprühtechnik, dadurch gekennzeichnet, daß mit einer erfindungsgemäßen Tintenformulierung gefärbt oder gedruckt wird.

Eingesetzt werden vorzugsweise wäßrige Reaktivfarbstofflösungen, die gegebenenfalls Antiaggregationsmittel enthalten. Im Falle des Ink-Jet-Verfahrens werden zweckmäßigerweise entsalzene Reaktivfarbstoffe eingesetzt, um die Standzeiten der feinen Düsen zu verlängern, jedoch lassen sich auch Farbstoffpräparationen mit bis zu 50 Gew.-% an Elektrolytsalz mit der Tintenstrahltechnik applizieren.

Die wäßrige Farbstofflösung wird mit einem Gemisch der vorstehend beschriebenen Komponenten b) und gegebenenfalls d) versetzt. Da viele handelsübliche neutrale bis schwach basische Tapetenlöser aus einem solchen Mischungsverhältnis der in Komponente b) genannten Verbindungen bestehen, welches sich für den erfindungsgemäßen Zweck eignet, ist es aus Gründen der Arbeitsökonomie vorteilhaft, einen derartigen Tapetenlöser direkt der wäßrigen Farbstofflösung zuzugeben. Eine Menge von 0,5 bis 20 Gew.-%, vorzugsweise 3 bis 10 Gew.-%, des Tapetenlösers, bezogen auf das Gesamtgewicht der Tintenformulierung, hat sich als zweckmäßig erwiesen.
In vielen Fällen ist es vorteilhaft, die wäßrige Farbstofflösung zunächst zusammen mit der Komponente b) oder dem Tapetenlöser zu erhitzen und dann unter heftigem Rühren abzukühlen, um eine ausreichende Vermischung und Aufspaltung eventueller Farbstoffassoziate zu erreichen.

Anschließend wird die für die Aufnahme der Tinte vorgesehene leere Kartusche mit der erfindungsgemäßen Tintenformulierung beschickt. Es können auch gebrauchte Tintenkartuschen verwendet werden, nachdem sie mit Wasser oder einem anderen geeigneten Reinigungsmittel gespült wurden, bis der Ablauf farblos war.

Beim Mehrfarbendruck können mehrere Tintenkartuschen hintereinander geschaltet werden, die sich zur Erzeugung des Druckes auf der sich bewegenden Materialbahn mit den heutzutage üblichen Mitteln steuern lassen. Es können auch moderne Mehrkammer-Tintenstrahlpatronen eingesetzt werden, mit welchen in einem Durchgang gleichzeitig mehrere Farben aufgetragen werden können.

Gegenstand der vorliegenden Erfindung ist auch die Verwendung einer erfindungsgemäßen Tintenformulierung für den Ink-Jet-Druck oder für ein anderes berührungsloses Druckverfahren mit wasserlöslichen Farbstoffen auf Papier. Es zeigte sich, daß die Brillianz der eingesetzten Farbstoffe durch die Tintenformulierung nicht beeinträchtigt wird und brilliante, farbstarke Drucke mit sehr guter Wasserechtheit und Wassertropfenechtheit erhalten werden.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile verhalten sich zu Volumenteilen wie Kilogramm zu Liter. Die Wasserfestigkeit wurde unter fließendem Wasser getestet.

Beispiel 1

Eine handelsübliche Tintenkartusche eines nach dem DOD (drop on demand) - Verfahren arbeitenden Ink-Jet-Druckers mit piezoelektrischer Tintensprühtechnik wird mit Wasser gereinigt und durch eine Spritze mit einer Tintenformulierung beschickt, die aus 6 Gew.-% eines aus EP-A-158233 (US-PS 4 581 036 und 4 585 459) bekannten, roten Farbstoffs der Formel

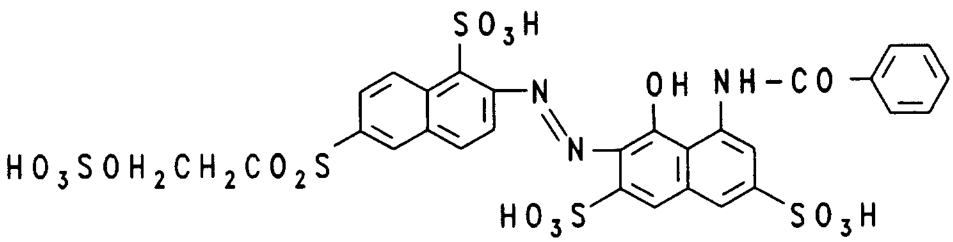

und 3 Gew.-% Isotridecylalkohols, verethert mit 8 Ethylenoxid-Einheiten und 91 Gew.-% Wasser besteht. Die Mischung kann zur schnelleren Lösbarkeit erwärmt werden. Unter Verwendung dieser Tintenformulierung entstehen brilliante, rote Drucke, die eine gute Wasserfestigkeit haben.

Beispiel 2

Eine handelsübliche Tintenkartusche eines nach dem Bubble-Jet-Verfahren arbeitenden Ink-Jet-Druckers mit thermischer Tintensprühtechnik wird mit Wasser gereinigt und durch eine Spritze mit einer Tintenformulierung beschickt, die aus 6 Gew.-% des Farbstoffes C.I. Reactive Yellow 37 der Formel

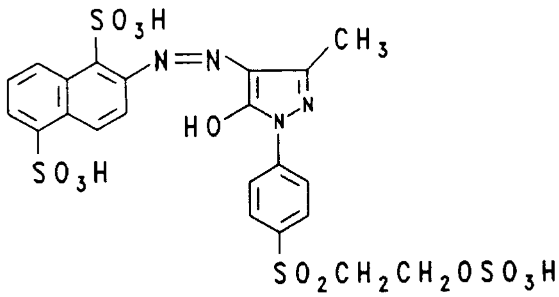

und 3 Gew.-% Kokosfettalkohol, verethert mit 8 Ethylenoxid-Einheiten und 91 Gew.-% Wasser besteht. Die Mischung kann zur schnelleren Lösbarkeit erwärmt werden. Unter Verwendung dieser Tintenformulierung entstehen brilliante, gelbe Drucke, die eine gute Wasserfestigkeit haben.

Beispiel 3

Eine handelsübliche Tintenkartusche eines nach dem DOD (drop on demand)-Verfahren arbeitenden Ink-Jet-Druckers mit piezoelektrischer Tintensprühtechnik wird mit Wasser gereinigt und mit einer Tintenformulierung beschickt, die aus 6 Gew.-% eines aus der DE-OS 1 179 317 (US-PS 3 268 548), Bsp. 2 bekannten, türkisen Farbstoffs der Formel

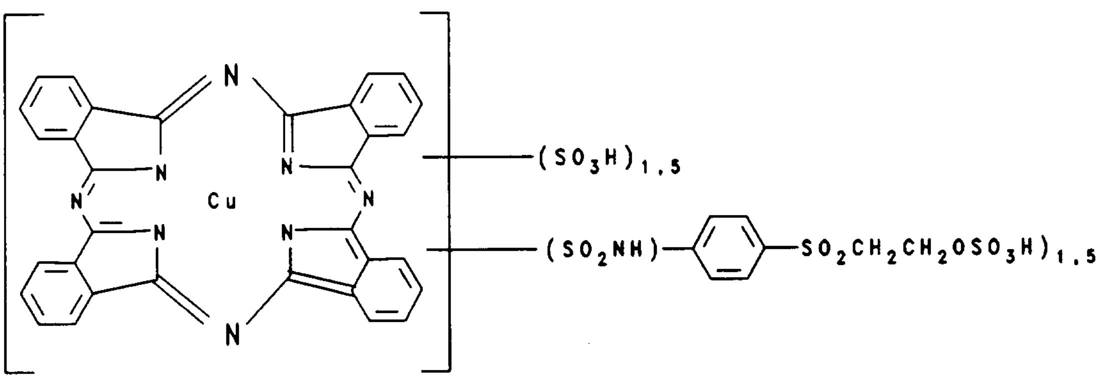

und 3 Gew.-% eines Ethylenoxid-Propylenoxid-Blockpolymerisates mit einem Ethylenoxid-Anteil von 20 % und 91 Gew.-% Wasser besteht. Die Mischung kann zur schnelleren Lösbarkeit erwärmt werden. Unter Verwendung dieser Tintenformulierung entstehen brilliante, türkise Drucke, die eine gute Wasserfestigkeit haben.

Beispiel 4

Eine handelsübliche Tintenkartusche eines nach dem DOD (drop on demand) - Verfahren arbeitenden Ink-Jet-Printers mit thermischer Tintensprühtechnik (Bubble Jet) wird mit Wasser gereinigt und mit einer Tintenformulierung beschickt, die neben Wasser aus 6 % eines aus EP-A 0 094 055 (CA-A-1 221 360) bekannten, roten Farbstoffs der Formel

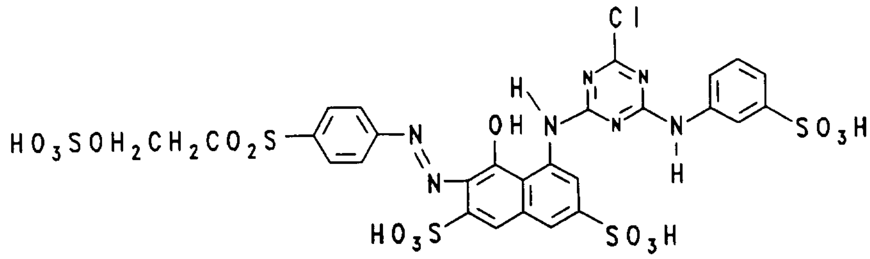

2 % eines Gemisches eines Kokosfettalkohols, der vorwiegend $C_{12}$-$C_{14}$-Einheiten enthält und mit 5 bis 20 Ethylenoxideinheiten verethert ist, 1 % N-Methyl-pyrrolidon (NMP) und 2 % Isopropylalkohol besteht. Die Mischung kann zur schnelleren Lösbarkeit erwärmt werden. Unter Verwendung dieser Tintenformulierung entstehen brilliante, rote Drucke, die eine gute Wasserfestigkeit haben.

Beispiel 5

Eine handelsübliche Tintenkartusche eines nach dem DOD (drop on demand) - Verfahren arbeitenden Ink-Jet-Printers mit piezoelektrischer Tintensprühtechnik (Bubble Jet) wird mit Wasser gereinigt und mit einer Tintenformulierung beschickt, die neben Wasser aus 6 % eines als C.I. Reactive Blue 19 bekannten, blauen Farbstoffs der Formel

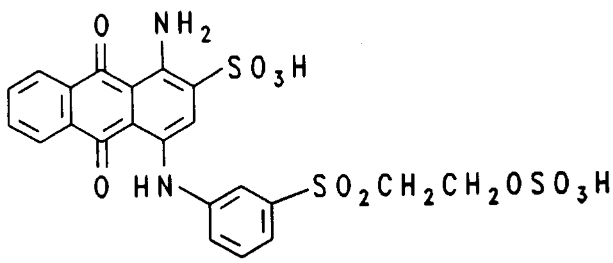

2 % Isotridecylalkohol mit einer Ethylenoxidzahl von 8, 1 % Dimethylformamid und 1 % Oleylalkohol mit einer Ethylenoxidzahl von 6 besteht. Die Mischung kann zur schnelleren Lösbarkeit erwärmt werden. Unter Verwendung dieser Tintenformulierung entstehen brilliante, blaue Drucke, die eine gute Wasserfestigkeit haben.

Beispiele 6 bis 36

Zur Herstellung weiterer Färbungen nach der erfindungsgemäßen Verfahrensweise bedruckt man Papier nach der Verfahrensweise eines Tintenstrahl-Druckers, beispielsweise analog nach einer der in den obigen Ausführungsbeispielen beschriebenen Methoden, unter Anwendung 6 %iger wäßriger Lösungen eines oder mehrerer in den nachfolgenden Tabellenbeispielen angegebenen, bekannten Farbstoffe (die Farbstoffe sind in Form der freien Säure geschrieben; sie werden jedoch in Form ihrer Alkalimetallsalze eingesetzt), die 3 bis 5 % eines handelsüblichen Tapetenlösers, beispielsweise TAB der Fa. AKA-Chemie enthalten. Man erhält klare, farbstarke Druckmuster mit den in dem jeweiligen Tabellenbeispiel angegebenen Farbton und den für den jeweiligen Farbstoff guten Echtheitseigenschaften, insbesondere guten Wasserechtheiten.

| Bsp. | verwendeter Farbstoff (als Alkalimetallsalz) | Farbton |
|---|---|---|
| 6 | 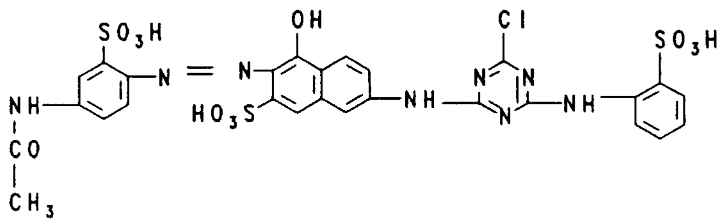 (bekannt aus der CH-PS 350 390) | scharlach |
| 7 | 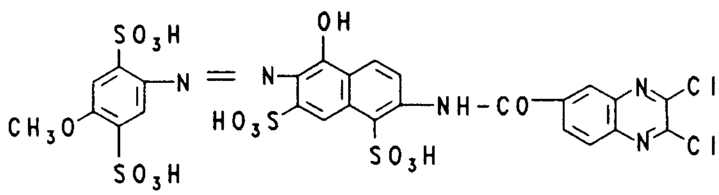 (bekannt aus der DE-OS 1 813 438, Bsp. 1) | scharlach |

| Bsp. | verwendeter Farbstoff (als Alkalimetallsalz) | Farbton |
|---|---|---|
| 8 | 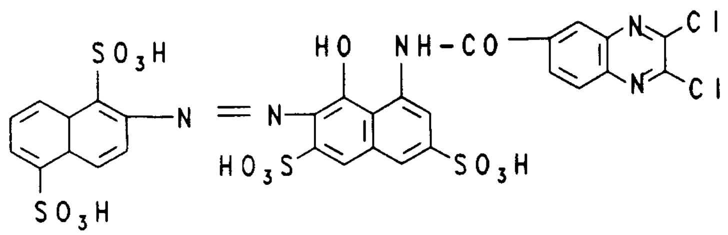<br>(bekannt aus der DE-AS 1 191 059) | rot |
| 9 | 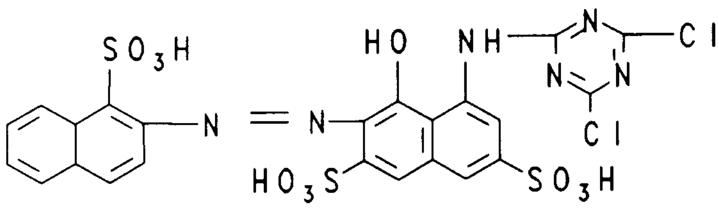<br>(bekannt aus Colour Index unter C.I. Reactive Red 11) | rot |
| 10 | 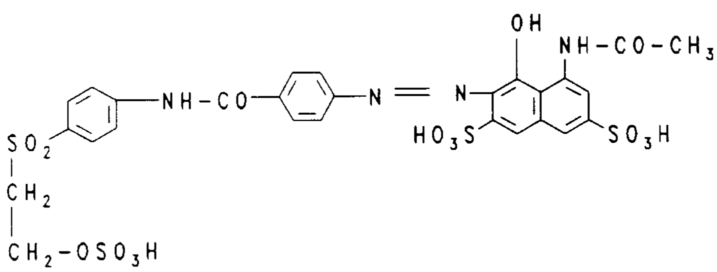<br>(bekannt aus der DE-AS 1 126 647) | rot |
| 11 | 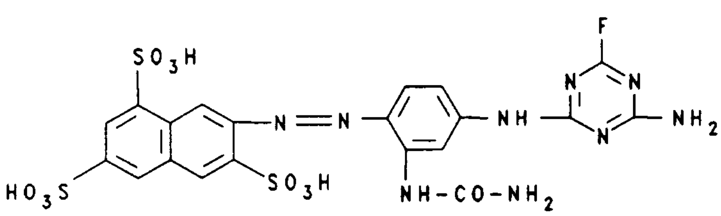<br>(bekannt aus Colour Index unter C.I. Reactive Yellow 152) | gelb |

| Bsp. | verwendeter Farbstoff (als Alkalimetallsalz) | Farbton |
|---|---|---|
| 12 | 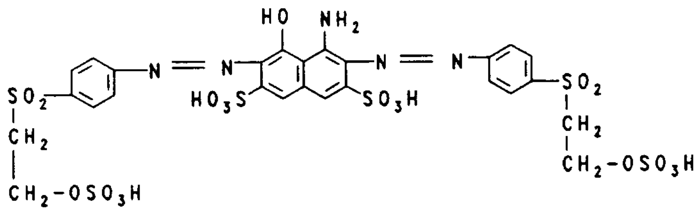 (bekannt aus Colour Index unter C.I. Reactive Black 5) | marineblau |
| 13 | 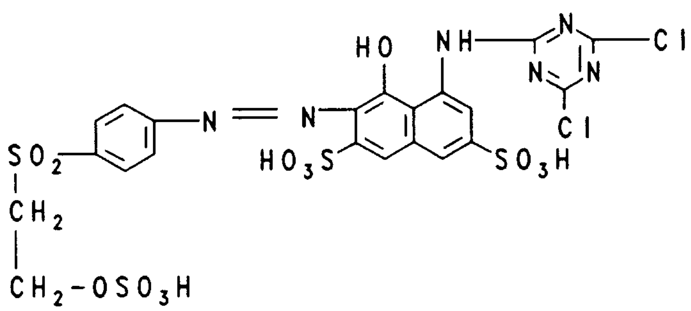 (bekannt aus der JP-AS 63/23287) | rot |
| 14 | 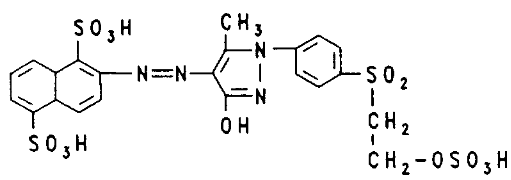 (bekannt aus Colour Index unter C.I. Reactive Yellow 37) | gelb |
| 15 | 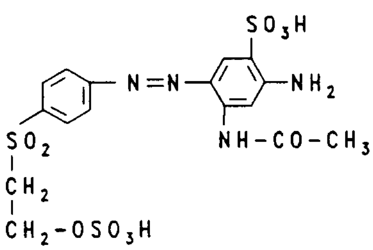 (bekannt aus EP-PS 0 073 481) | gelb |

| Bsp. | verwendeter Farbstoff (als Alkalimetallsalz) | Farbton |
|---|---|---|
| 16 | 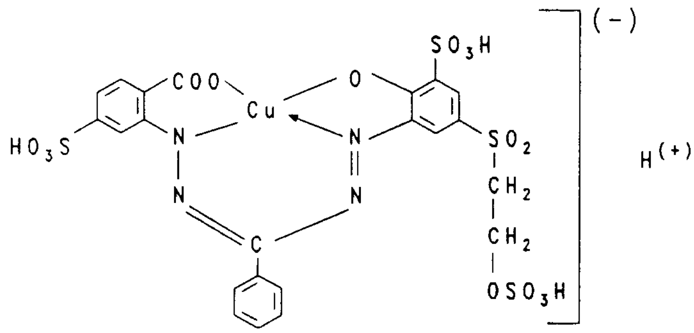<br>(bekannt aus EP-PS 0 028 788) | blau |
| 17 | 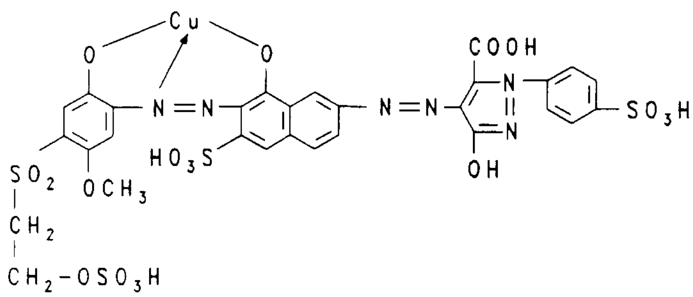<br>(bekannt aus Colour Index unter C.I. Reactive Black 31) | schwarz |
| 18 | 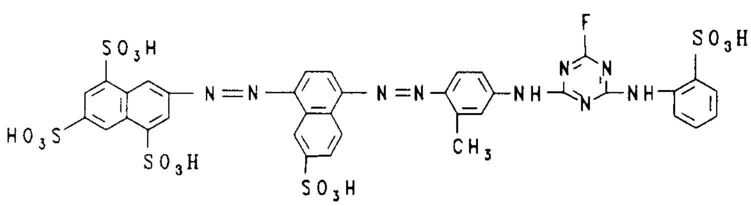<br>(bekannt aus der DE-OS 2 733 109, Bsp. 2) | rotbraun |

| Bsp. | verwendeter Farbstoff (als Alkalimetallsalz) | Farbton |
|---|---|---|
| 19 | 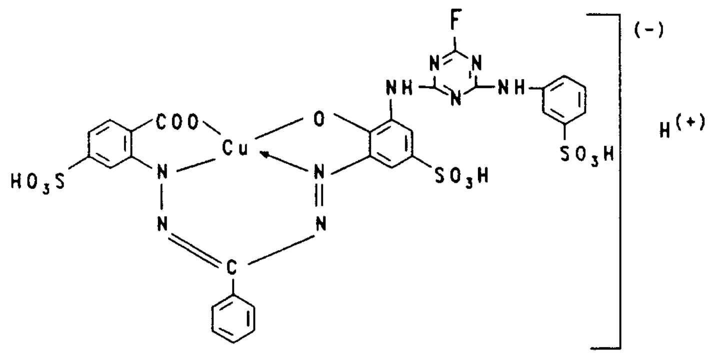 (bekannt aus der EP-A-0 228 348) | blau |
| 20 | 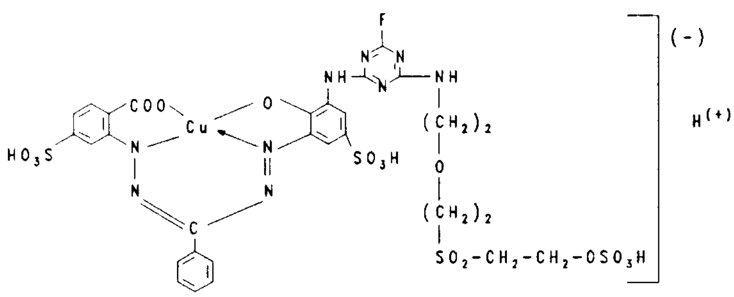 (bekannt aus der EP-OS 0 144 766) | blau |
| 21 | 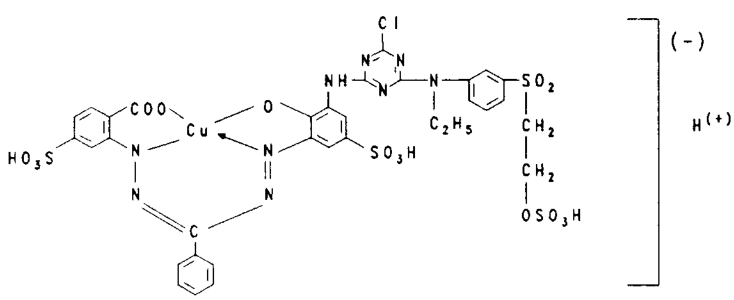 (bekannt aus der EP-OS 99 721)) | blau |

| Bsp. | verwendeter Farbstoff (als Alkalimetallsalz) | Farbton |
|---|---|---|
| 22 | 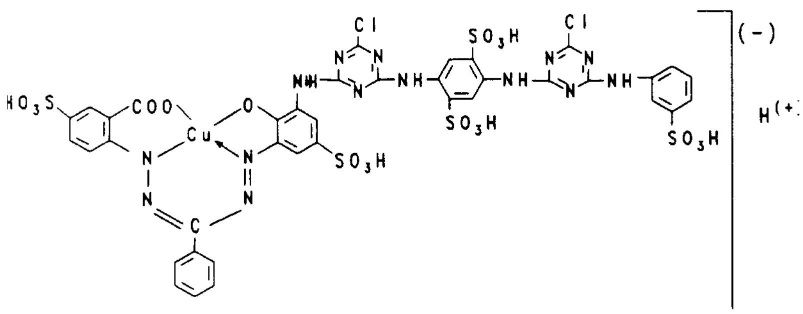<br>(bekannt aus der DE-OS 2 342 197, Bsp. 2) | blau |
| 23 | 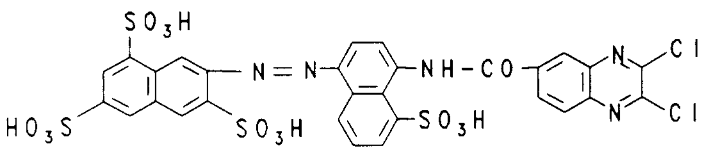<br>(bekannt aus der DE-AS 1 191 059) | gelb |
| 24 | 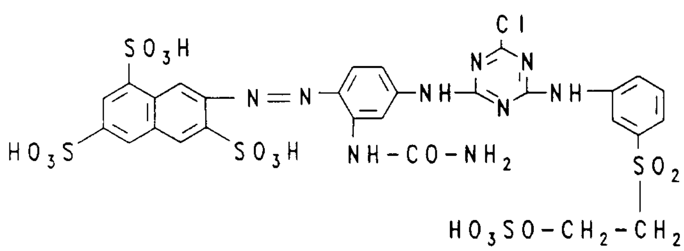<br>(bekannt aus der Europäischen Patentanmeldungs-Veröffentlichung 0 056 975) | gelb |

| Bsp. | verwendeter Farbstoff (als Alkalimetallsalz) | Farbton |
|---|---|---|
| 25 | 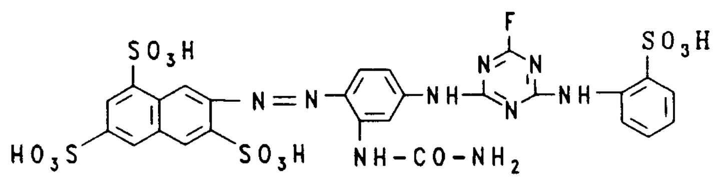 (bekannt aus Colour Index C.I. Reactive Orange 91) | gelb |
| 26 | 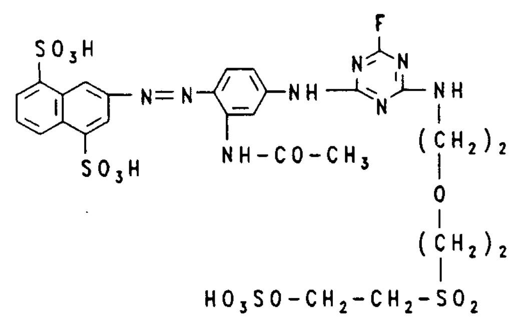 (bekannt aus der EP-OS 0 457 715) | gelb |
| 27 | 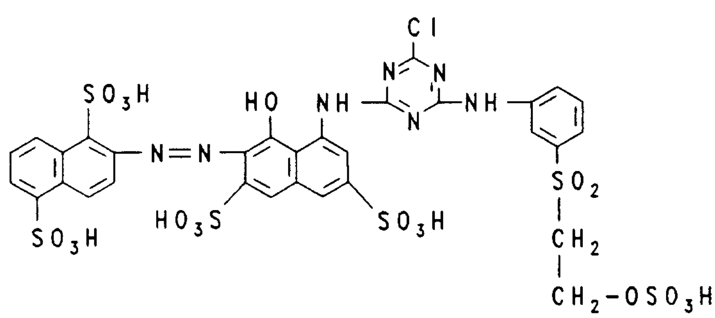 (bekannt aus der EP-A-0 022 575) | rot |

| Bsp. | verwendeter Farbstoff (als Alkalimetallsalz) | Farbton |
|---|---|---|
| 28 | 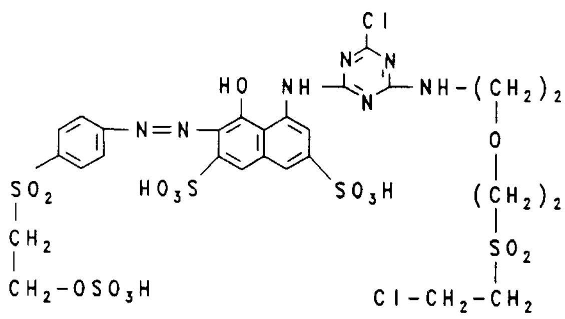<br>(bekannt aus der EP-OS 0 144 766, Bsp. 5) | rot |
| 29 | 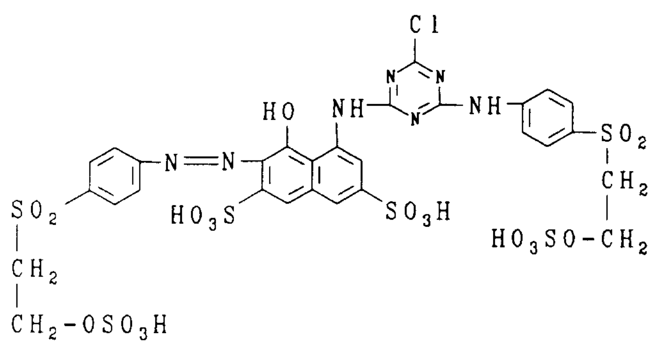<br>(bekannt aus der EP-PS 0 094 055) | rot |
| 30 | 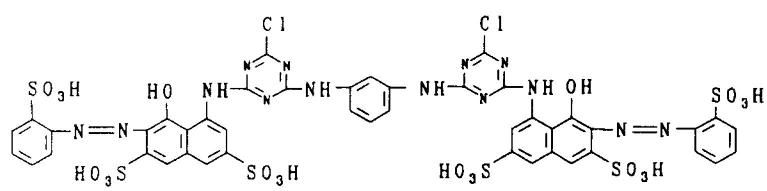<br>(bekannt aus der DE-OS 2 001 960) | rot |

| Bsp. | verwendeter Farbstoff (als Alkalimetallsalz) | Farbton |
|---|---|---|
| 31 | 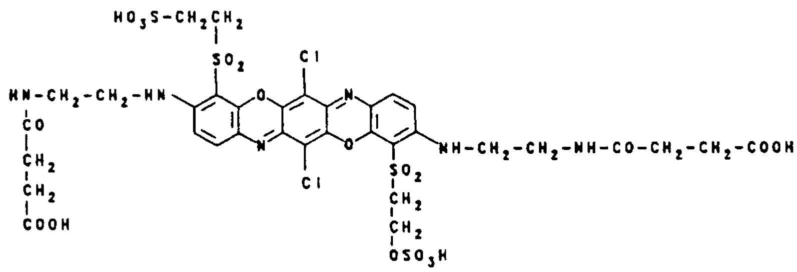 (bekannt aus der US-PS 4,629,788) | blau |

Verwendet man die in Beispiel 1 bis 31 beschriebenen Farbstoffe im Rahmen eines Mehrfarbdruckes, entweder in einem Durchgang oder hintereinander in Verbindung mit einer Farbseparation, lassen sich beliebig viele Mischfarben auf diese Weise darstellen, die dieselben guten Anwendungsprofile (Wasserbeständigkeit, Brillianz) aufweisen.

**Patentansprüche**

1. Tintenformulierung, bestehend im wesentlichen aus
   a) mindestens einem wasserlöslichen Farbstoff,
   b) mindestens einem Fettalkoholpolyglykolether, Oxofettalkoholpolyglykolether, Alkylpolyglykolether oder Ethylenoxid-Propylenoxid-Blockpolymerisat oder einem Gemisch der genannten Verbindungen,
   c) Wasser sowie
   d) gegebenenfalls weiteren üblichen Zusatzstoffen.

2. Tintenformulierung nach Anspruch 1, dadurch gekennzeichnet, daß der wasserlösliche Farbstoff eine oder mehrere Sulfo- oder Carboxygruppen oder eine Kombination dieser Gruppen enthält.

3. Tintenformulierung nach Anspruch 1 oder 2, dadurch gekennzeichnet, daß der wasserlösliche Farbstoff eine oder mehrere faserreaktive Gruppen enthält.

4. Tintenformulierung nach mindestens einem der Ansprüche 1 bis 3, dadurch gekennzeichnet, daß die Komponente b) ein oder mehrere Fettalkoholpolyglykolether oder Oxofettalkoholpolyglykolether ist oder enthält, der sich aus einem Fettalkohol oder Oxofettalkohol mit 8 bis 30, vorzugsweise 12 bis 18, Kohlenstoffatomen und 2 bis 50, vorzugsweise 2 bis 20, Ethylenoxid-Einheiten zusammensetzt.

5. Tintenformulierung nach mindestens einem der Ansprüche 1 bis 3, dadurch gekennzeichnet, daß die Komponente b) ein oder mehrere Alkylpolyglykolether ist oder enthält, der sich aus einer Alkylgruppe mit 8 bis 30, vorzugsweise 12 bis 18, Kohlenstoffatomen und 2 bis 50, vorzugsweise 2 bis 20, Ethlyenoxid-Einheiten zusammensetzt.

6. Tintenformulierung nach mindestens einem der Ansprüche 1 bis 3, dadurch gekennzeichnet, daß die Komponente b) ein oder mehrere Ethylenoxid-Propylenoxid-Blockpolymerisate ist oder enthält, die zu 10 bis 80 Mol-%, vorzugsweise 10 bis 40 Mol-%, aus Ethylenoxid und zu 90 bis 20 Mol-%, vorzugsweise 90 bis 60 Mol-%, aus Propylenoxid bestehen und einen HLB-Wert größer als 2 haben.

7. Tintenformulierung nach mindestens einem der Ansprüche 1 bis 3, dadurch gekennzeichnet, daß die Komponente b) eine Mischung aus einem oder mehreren Fettalkoholpolyglykolethern, Oxofettalkoholpolyglykolethern, Alkylpolyglykolethern und/oder Ethylenoxid-Propylenoxid-Blockpolymerisaten ist.

**8.** Tintenformulierung nach mindestens einem der Ansprüche 1 bis 7, bestehend zu
3 bis 10 Gew.-%, vorzugsweise 4 bis 6 Gew.-%, aus Komponente a),
zu 1 bis 10 Gew.-%, vorzugsweise 2 bis 5 Gew.-%, aus Komponente b),
zu 94 bis 77 Gew.-%, vorzugsweise 92 bis 86 Gew.-%, aus Komponente c),
und zu 0 bis 5 Gew.-%, vorzugsweise 2 bis 3 Gew.-% aus Komponente d), mit der Maßgabe, daß die Summe der Komponenten a) bis d) 100 Gew.-% ergibt.

**9.** Verfahren zum Färben oder Bedrucken von Papier mit wasserlöslichen, vorzugsweise anionischen Farbstoffen, insbesondere Reaktivfarbstoffen, unter Anwendung des Ink-Jet-Verfahrens oder einer anderen Minimalauftragssprühtechnik, dadurch gekennzeichnet, daß mit einer Tintenformulierung nach mindestens einem der Ansprüche 1 bis 8 gefärbt oder gedruckt wird.

**10.** Verfahren nach Anspruch 9, dadurch gekennzeichnet, daß man die Tintenformulierung herstellt, indem man eine Menge von 0,5 bis 20 Gew.-%, vorzugsweise 3 bis 10 Gew.-%, eines üblichen neutralen oder schwach-basischen Tapetenlösers, bezogen auf das Gesamtgewicht der Tintenformulierung, einer wäßrigen Farbstofflösung zusetzt.

**11.** Verwendung einer Tintenformulierung nach mindestens einem der Ansprüche 1 bis 8 für den Ink-Jet-Druck oder ein anderes berührungsloses Druckverfahren mit wasserlöslichen Farbstoffen auf Papier.

Europäisches Patentamt

# EUROPÄISCHER RECHERCHENBERICHT

Nummer der Anmeldung
EP 93 11 9887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 518 490 (XEROX CORP.)<br>* Seite 4, Zeile 11 - Zeile 12 *<br>* Seite 4, Zeile 27 - Zeile 36 *<br>* Seite 4, Zeile 41 - Zeile 48; Ansprüche 1,2 *<br>--- | 1,2,4, 7-9,11 | C09D11/00 |
| X | EP-A-0 404 494 (XEROX CORP.)<br>* Ansprüche 1-5 *<br>--- | 1,5,8,9, 11 | |
| X | EP-A-0 497 522 (XEROX CORP.)<br>* Seite 4, Absatz 2; Ansprüche 1,8-10,14 *<br>--- | 1,2,8,9, 11 | |
| X | DE-A-36 14 462 (CANON KK)<br>* Seite 13, Absatz 1 *<br>* Seite 21, Absatz 2 *<br>* Seite 22, Zeile 1 - Zeile 3; Beispiel 11 *<br>--- | 1,2,5,8, 9,11 | |
| | | | RECHERCHIERTE SACHGEBIETE (Int.Cl.5) |
| X | GB-A-2 199 041 (CANON KK)<br>* Seite 10, Absatz 3 *<br>* Seite 10, Absatz 5 *<br>* Seite 12, Zeile 14 - Zeile 21 *<br>* Seite 13, Zeile 2 - Zeile 5 *<br>----- | 1,8,9,11 | C09D |

Der vorliegende Recherchenbericht wurde für alle Patentansprüche erstellt

| Recherchenort | Abschlußdatum der Recherche | Prüfer |
|---|---|---|
| DEN HAAG | 23. März 1994 | Girard, Y |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument